# EUROPÄISCHE PATENTSCHRIFT

(11) **EP 2 082 147 B1**
(45) Veröffentlichungstag und Bekanntmachung des Hinweises auf die Patenterteilung: **03.03.2010**
(21) Anmeldenummer: 08707227.8
(22) Anmeldetag: 24.01.2008
(51) Int. Cl.: F16D 33/14, F16D 33/02

(54) **HYDRODYNAMISCHE KUPPLUNG**
HYDRODYNAMIC CLUTCH
EMBRAYAGE HYDRODYNAMIQUE

(30) Priorität: 31.01.2007 DE 102007005663
(43) Veröffentlichungstag der Anmeldung: 29.07.2009
(73) Patentinhaber: Voith Patent GmbH, 89522 Heidenheim (DE)
(72) Erfinder: SCHIPS, Rainer, 79479 Ellwangen (DE); FLEMMER, Daniel, 74564 Crailsheim (DE); BROCKMANN, Rolf, 89522 Heidenheim (DE)
(74) Vertreter: Dr. Weitzel & Partner
(86) Internationale Anmeldenummer: PCT/EP2008/000515
(87) Internationale Veröffentlichungsnummer: WO 2008/092596

(56) Entgegenhaltungen:
- EP-A- 1 762 737
- WO-A-2005/050046
- DE-B3-102005 050 219
- US-A- 3 955 367

## Beschreibung

Die Erfindung betrifft eine hydrodynamische Kupplung.

Hydrodynamische Kupplungen sind bekannt. Sie weisen ein Pumpenrad und ein Turbinenrad auf, welches in der Regel die beiden einzigen Schaufelräder der hydrodynamischen Kupplung sind. Demnach ist kein Leitrad vorgesehen.

Das Pumpenrad und das Turbinenrad bilden miteinander einen, in der Regel torusförmigen, Arbeitsraum aus, der mit einem Arbeitsmedium, beispielsweise Öl, Wasser oder ein Wassergemisch, befüllt oder befüllbar ist. Im Pumpenrad wird das Arbeitsmedium radial nach außen beschleunigt, tritt in das Turbinenrad ein, wird dort radial nach innen verzögert und tritt wieder in das Pumpenrad ein. Mittels diesem Arbeitsmediumkreislauf wird Drehmoment beziehungsweise Antriebsleistung vom Pumpenrad auf das Turbinenrad verschleißfrei übertragen.

Es ist bekannt, in hydrodynamischen Kupplungen feststehende oder verschiebbare Drosselscheiben anzuordnen siehe EP 1762737 bzw. DE 102005043756, um den Arbeitsmediumkreislauf und damit das Übertragungsverhalten der hydrodynamischen Kupplung zu beeinflussen, insbesondere gezielt einzustellen. Beispielsweise beschreibt die Offenlegungsschrift DE 103 53 518 A1 zwei alternative Möglichkeiten, Drosselscheiben vorzusehen. Gemäß der ersten Ausführung sind feststehende in Axialrichtung der hydrodynamischen Kupplung oder in Radialrichtung der hydrodynamischen Kupplung ausgerichtete Drosselscheiben vorgesehen, welche je nach Schlupf zwischen Pumpenrad und Turbinenrad eine mehr oder minder drosselnde Wirkung auf den Arbeitsmediumkreislauf ausüben. Gemäß der zweiten Ausführungsform sind in Axialrichtung der hydrodynamischen Kupplung verschiebbare Wandbereiche des Pumpenrads vorgesehen, um den Arbeitsmediumkreislauf zu beeinflussen.

Die Offenlegungsschrift WO 2005/050047 A1 beschreibt in Radialrichtung der hydrodynamischen Kupplung verlaufende Drosselscheiben, die in Axialrichtung der hydrodynamischen Kupplung alleine oder zusammen mit einem Teil des Pumpenrads oder Turbinenrads der hydrodynamischen Kupplung verschiebbar sind, um wahlweise in die Kreislaufströmung von Arbeitsmedium im Arbeitsraum eingebracht zu werden und so das Übertragungsverhalten der hydrodynamischen Kupplung zu beeinflussen.

Bei der erstgenannten Ausführung gemäß DE 103 53 518 A1 mit feststehenden axial ausgerichteten Drosselscheiben ist eine gezielte Einstellung des Übertragungsverhaltens der hydrodynamischen Kupplung nur bedingt möglich. Vielmehr ergibt sich eine fest vorgegebene Abhängigkeit der Wirkung der Drosselscheibe vom Schlupf. Auch die vorgeschlagene Verschiebung von Teilen der Schaufelradwandung des Pumpenrads, insbesondere im Bereich des radial äußeren Durchmessers der hydrodynamischen Kupplung beziehungsweise von deren Arbeitsraum, lässt nur eine begrenzte Einflussnahme auf das Übertragungsverhalten zu.

Bei der Ausführung gemäß der genannten WO-Veröffentlichung 2005/050047 A1 ist aufgrund der radialen Ausrichtung der Drosselscheibe eine vergleichsweise große Kraft zum Verschieben der Drosselscheibe in Axialrichtung notwendig. In der Regel muss daher der Füllungsgrad der hydrodynamischen Kupplung, das heißt die Menge von Arbeitsmedium, die im Arbeitsraum umläuft, vermindert werden, um die Axialverschiebung der Drosselscheibe durchführen zu können.

Die Offenlegungsschrift DE 103 53 554 A1 beschreibt gemäß einem Ausführungsbeispiel eine ringförmige Drosselscheibe, die einen waagerechten, in Umfangsrichtung der hydrodynamischen Kupplung verlaufenden Abschnitt eines Ringschiebers aufweist, der über einen Verstellmechanismus, der radial außerhalb des Arbeitsraumes angeordnet ist, betätigbar ist.

Die Patentschrift DE 582 886 beschreibt eine Drosselscheibe, die in Umfangsrichtung der hydrodynamischen Kupplung im Bereich eines mittleren Durchmessers des Arbeitsraums verläuft und sich in einem Axialschnitt durch die hydrodynamische Kupplung gesehen mit ihrer von einer Kreislaufströmung des Arbeitsmediums angeströmten Anströmseite achsparallel zur Drehachse der hydrodynamischen Kupplung erstreckt. Um die Drosselscheibe in ihre inaktive Position zu bewegen, wird diese aus dem Arbeitsraum herausgeschoben, und zwar in einen Kernringbereich, welcher gegenüber dem Arbeitsraum durch eine Wandung abgegrenzt ist. Die Drosselscheibe ist in ihrer inaktiven Position somit nicht unmittelbar von den strömungsführenden Bereichen des Arbeitsraumes umgeben, sondern durch die Wandung, welche den Kernringbereich ausbildet, getrennt von diesen positioniert. Die gezeigte Ausführungsform verlangt einen hohen konstruktiven Aufwand.

Der Erfindung liegt die Aufgabe zugrunde, eine hydrodynamische Kupplung mit einer Drosselscheibe zur Beeinflussung des Übertragungsverhaltens der hydrodynamischen Kupplung anzugeben, bei welcher einerseits eine große Einflussnahme auf das Übertragungsverhalten, das heißt die vom Pumpenrad auf das Turbinenrad übertragene Antriebsleistung beziehungsweise das übertragene Drehmoment, durch axiales Verschieben der Drosselscheibe innerhalb von dem beziehungsweise in den und aus dem Arbeitsraum möglich ist, und andererseits eine leichte Verschiebbarkeit der Drosselscheibe in jedem Betriebszustand und bei jedem Füllungszustand der hydrodynamischen Kupplung gewährleistet ist. Ferner soll eine konstruktiv einfache und möglichst kompakte Ausführung der hydrodynamischen Kupplung geschaffen werden.

Die erfindungsgemäße Aufgabe wird durch eine hydrodynamische Kupplung mit den Merkmalen von Anspruch 1 gelöst. Die abhängigen Ansprüche beschreiben vorteilhafte und besonders zweckmäßige Ausgestaltungen der Erfindung.

Die erfindungsgemäße hydrodynamische Kupplung weist ein Pumpenrad und ein Turbinenrad auf, die miteinander einen torusförmigen, mit einem Arbeitsmedium befüllbaren oder befüllten Arbeitsraum ausbilden. Es ist eine Drosselscheibe vorgesehen, die in Axialrichtung der hydrodynamischen Kupplung verschiebbar ist, um wahlweise in den Arbeitsraum eingebracht und/oder innerhalb von diesem verschoben zu werden.

Die Drosselscheibe verläuft erfindungsgemäß in Umfangsrichtung der hydrodynamischen Kupplung, das heißt um die Drehachse der hydrodynamischen Kupplung herum, in der Regel in einer Kreisringform, elliptischen Form oder auch einer vieleckigen Form. Die Drosselscheibe kann kontinuierlich oder unterbrochen in Umfangsrichtung der hydrodynamischen Kupplung ausgeführt sein.

Erfindungsgemäß ist die Drosselscheibe im Bereich eines mittleren Durchmessers des Arbeitsraums vorgesehen, das heißt sie ist mit einem Abstand gegenüber dem äußeren Durchmesser des Arbeitsraums und gegenüber dem inneren Durchmesser des Arbeitsraums angeordnet.

Die Drosselscheibe erstreckt sich in Axialrichtung der hydrodynamischen Kupplung, das heißt sie weist eine Anströmseite auf, gegen welche das Arbeitsmedium bei Ausbildung einer Kreislaufströmung im Arbeitsraum strömt, und welche, in einem Axialschnitt durch die hydrodynamische Kupplung gesehen, achsparallel oder im wesentlichen achsparallel zur Drehachse der hydrodynamischen Kupplung verläuft. Der Axialschnitt ist durch die Drehachse der hydrodynamischen Kupplung geführt. Unter achsparallel ist dabei nicht nur eine exakte Achsparallelität zu verstehen, sondern auch eine gewisse winklige Anordnung der Anströmseite der Drosselscheibe gegenüber der Drehachse der hydrodynamischen Kupplung ist möglich. Je stärker der Winkel, desto stärker ist die Kraft, welche notwendig ist, um die Drosselscheibe in Axialrichtung zu verschieben. Der Winkel sollte daher verhältnismäßig gering sein. In jedem Fall ist er kleiner als 90 Grad, beispielsweise zwischen 0 und 45 Grad, insbesondere zwischen 0 und 30 Grad und besonders vorteilhaft zwischen 0 und 10 oder 0 und 5 Grad gegenüber der Drehachse der hydrodynamischen Kupplung auszuführen.

Die Drosselscheibe kann die Form eines Hohlzylinders oder eines Sektors eines Hohlzylinders beziehungsweise einer Vielzahl von einzelnen Sektoren eines Hohlzylinders aufweisen. In beiden Fällen ist der Abstand der Drosselscheibe von der Drehachse der hydrodynamischen Kupplung über dem gesamten Umfang der hydrodynamischen Kupplung konstant. Selbstverständlich sind auch andere Formen mit variierendem Abstand gegenüber der Drehachse über dem Umfang der hydrodynamischen Kupplung denkbar. Bei einer winkligen Anordnung kommen beispielsweise Kegelformen oder Abschnitte von Kegeln in Betracht.

Die Drosselscheibe wird vorteilhaft von einem Verstellmechanismus getragen und/oder ist an einem solchen angeschlossen, welcher radial von innen und/oder radial von außen in einem mittleren axialen Bereich an der Drosselscheibe angreift. Insbesondere bildet die Drosselscheibe zusammen mit dem an ihr angreifenden Teil des Verstellmechanismus die Form eines T aus, in einem Axialschnitt durch die hydrodynamische Kupplung beziehungsweise in Umfangsrichtung durch die Drosselscheibe und den Verstellmechanismus gesehen.

Der Vorteil dieser Anordnung wird noch im Zusammenhang mit den beigefügten Figuren beschrieben.

Die Drosselscheibe ist, insbesondere bei der zuletzt genannten Ausführungsform, erfindungsgemäß aus einer inaktiven Position, die im Bereich des Trennspaltes zwischen dem Pumpenrad und dem Turbinenrad der hydrodynamischen Kupplung angeordnet ist, in eine aktive Position, welche im Pumpenrad oder im Turbinenrad im Bereich eines mittleren Durchmessers des Arbeitsraums vorgesehen ist, verschiebbar. Hierdurch ist der notwendige axiale Bauraum für die Drosselscheibe, umfassend sowohl ihre aktive, die Kreislaufströmung von Arbeitsmedium drosselnde Position als auch ihre inaktive, die Kreislaufströmung von Arbeitsmedium im Arbeitsraum nicht beeinträchtigende Position, minimal, insbesondere weil sich der Verschiebeweg der Drosselscheibe vollständig oder im wesentlichen vollständig, zumindest in Axialrichtung oder in jeglicher Richtung der hydrodynamischen Kupplung innerhalb des Arbeitsraumes befindet.

Sowohl in ihrer aktiven Position als auch in ihrer inaktiven Position ist die Drosselscheibe unmittelbar im Arbeitsraum positioniert, das heißt sie ist nicht durch eine Wandung oder dergleichen vom Arbeitsraum abgegrenzt. Vielmehr weist der Arbeitsraum in einem Axialschnitt durch die hydrodynamische Kupplung gesehen einen Querschnitt auf, der frei von einem durch eine Wandung abgegrenzten Zentrumsbereich ist. Die Drosselscheibe steht somit in ihrer inaktiven Position als auch in ihrer aktiven Position den strömungsführenden Bereichen des Arbeitsraums direkt, das heißt ohne Zwischenschaltung von Bauteilen, gegenüber. Vorteilhaft ist die Drosselscheibe ausschließlich innerhalb des Arbeitsraumes verschiebbar.

Besonders vorteilhaft weist der Querschnitt des Arbeitsraums in einem Axialschnitt durch die hydrodynamische Kupplung gesehen eine Vollkreisform auf, beziehungsweise eine vollflächige Form, die sich auch durch eine elliptische Form beziehungsweise eine von der kreisrunden Form abweichenden Form ergeben kann. Diese Angaben beziehen sich dabei auf jeweils eine Hälfte des Axialschnittes, bezogen auf die Drehachse der hydrodynamischen Kupplung, da in diesem Axialschnitt naturgemäß der Querschnitt des Arbeitsraums jeweils einmal beidseitig der Drehachse der hydrodynamischen Kupplung auftritt.

Die Erfindung soll nachfolgend anhand von.Ausführungsbeispielen und den beigefügten Figuren exemplarisch erläutert werden.

Es zeigen:
- Figur 1: den notwendigen axialen Bauraum für eine Drosselscheibe in einer hydrodynamischen Kupplung, die, wie herkömmlich, eine inaktive Position außerhalb des Arbeitsraums aufweist;
- Figur 2: eine erfindungsgemäße Ausführungsform, die eine besonders kompakte Bauweise zulässt;
- Figur 3: mögliche Ausführungsformen für die Drosselscheibengestaltung in einem Axialschnitt durch die hydrodynamische Kupplung gesehen;
- Figur 4: mögliche Querschnittsformen für den Verstellmechanismus in einem achsparallelen Schnitt zu der Drehachse der hydrodynamischen Kupplung beziehungsweise in Umfangsrichtung um die Drehachse der hydrodynamischen Kupplung gesehen.

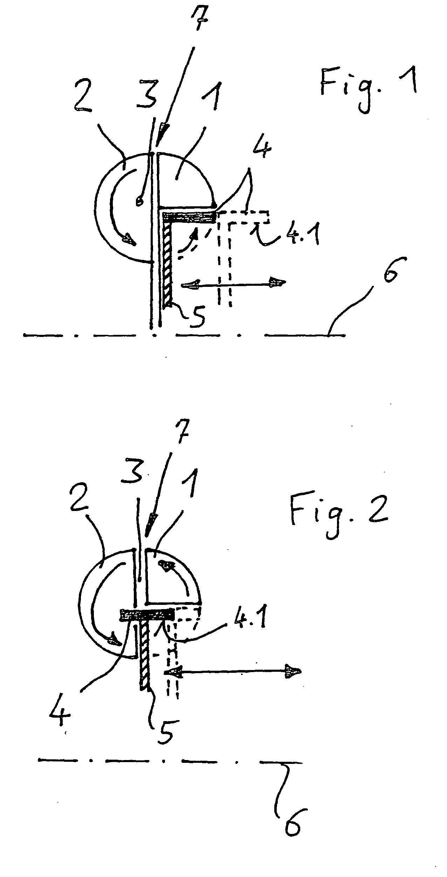

In der Figur 1 ist ein schematischer Axialschnitt durch eine hydrodynamische Kupplung dargestellt. Dabei ist nur eine Seite oberhalb der Drehachse 6 der hydrodynamischen Kupplung dargestellt. Man erkennt das Pumpenrad 1 und das Turbinenrad 2, welche miteinander einen torusförmigen Arbeitsraum 3 ausbilden. Im Pumpenrad 1 ist im Bereich des mittleren Durchmessers des Arbeitsraums 3 eine Drosselscheibe 4 mit einem daran angeschlossenen Verstellmechanismus 5 angeordnet. Die Kreislaufströmung von Arbeitsmedium im Arbeitsraum 3 (siehe die Pfeile) treffen radial von innen nach außen auf die Drosselscheibe 4, und zwar auf die Anströmseite 4.1 der Drosselscheibe 4, welche sich achsparallel beziehungsweise in einer Kreisringform (kontinuierlich oder unterbrochen) um die Drehachse 6 der hydrodynamischen Kupplung erstreckt.

In ausgezogenen Linien ist die aktive Position der Drosselscheibe 4 mit dem Verstellmechanismus 5 dargestellt. In gestrichelten Linien ist die inaktive Position dargestellt. Wie man sieht, ist die Drosselscheibe 4 mit dem Verstellmechanismus 5 somit von einem Bereich axial außerhalb des Arbeitsraums 3 (inaktive Position) mehr oder minder in den Arbeitsraum 3 einschiebbar, bis sie die in ausgezogenen Linien dargestellte maximale Drosselposition erreicht (aktive Position), in welcher in Radialrichtung nach außen betrachtet der gesamte oder im wesentlichen der gesamte Querschnitt des Pumpenrads 1 von der Drosselscheibe 4 abgedeckt wird. Die Abdeckung kann dabei in Umfangsrichtung um die Drehachse 6 herum eine vollständige oder eine unterbrochene sein, je nach Ausführung der Drosselscheibe 4.

In der Position der maximalen Drosselung reicht somit die Drosselscheibe 4 in Axialrichtung vom Trennspalt 7 zwischen dem Pumpenrad 1 und dem Turbinenrad 2 bis zum axial äußeren Ende des Pumpenrads 1. Da die Drosselscheibe 4 axial vollständig aus dem Arbeitsraum 3 bewegt wird, um die inaktive Position zu erreichen, ist ein entsprechender Bauraum axial außerhalb des Arbeitsraums 3 beziehungsweise des Pumpenrads 1 in der hydrodynamischen Kupplung vorzusehen.

Gemäß der Ausführung, welche in der Figur 2 dargestellt ist, kann erfindungsgemäß eine kompaktere Form, zumindest in Axialrichtung der hydrodynamischen Kupplung, erreicht werden. Hier ist nämlich die inaktive Position der Drosselscheibe 4 zusammen mit dem Verstellmechanismus 5 nicht außerhalb des Arbeitsraums 3 vorgesehen, sondern innerhalb desselben, und zwar vorteilhaft im Bereich der Kreismitte des torusförmigen Arbeitsraums beziehungsweise im Bereich des Kreislaufzentrums der Arbeitsmediumströmung im Arbeitsraum 3, siehe die Darstellung der Drosselscheibe 4 mit dem Verstellmechanismus 5 in ausgezogenen Linien. Beim Übergang von der inaktiven Position in die aktive Position (Darstellung in gestrichelten Linien) wird die Drosselscheibe 4 mit dem Verstellmechanismus 5 aus dem Bereich des Trennspalts 7 zwischen dem Pumpenrad 1 und dem Turbinenrad 2 axial in Richtung des Pumpenrads 1 verschoben, bis ein Teil des Querschnitts oder der gesamte Querschnitt in Radialrichtung des Pumpenrads 1 durch die Drosselscheibe 4 verschlossen wird. Im Hinblick auf die Gestaltung der Drosselscheibe 4 beziehungsweise das Verschließen des Querschnitts des Pumpenrads 1 in Umfangsrichtung der hydrodynamischen Kupplung gilt das zu der Figur 1 gesagte.

Gemäß der erfindungsgemäßen Ausführung, welche in der Figur 2 dargestellt ist, ist somit kein Bauraum für die Drosselscheibe 4 und/oder den Verstellmechanismus 5 axial und/oder radial außerhalb des Arbeitsraums 3 vorzusehen. Vielmehr wird die Drosselscheibe 4 vorteilhaft ausschließlich innerhalb des Arbeitsraums 3 bewegt, beziehungsweise verschoben, aus einer inaktiven Position, in welcher sie keinen drosselnden Eingriff oder im wesentlichen keinen drosselnden Eingriff auf die Kreislaufströmung von Arbeitsmedium im Arbeitsraum 3 ausübt, in eine Position, in welcher sie die Kreislaufströmung von Arbeitsmedium im Arbeitsraum 3 unterbricht, umlenkt oder drosselt, und wieder zurück.

Sowohl bei der Figur 1 als auch bei der Figur 2 ist eine Ausführung dargestellt, bei welcher die Drosselscheibe 4 in den Arbeitsraum 3 im Bereich des Pumpenrads 1 einbringbar ist. Selbstverständlich ist es zusätzlich oder alternativ möglich, die Drosselscheibe 4 in den Bereich des Arbeitsraums 3 einzubringen, welcher durch das Turbinenrad 2 ausgebildet wird. Abweichend von den dargestellten Ausführungen ist es ferner möglich, alternativ oder zusätzlich die Drosselscheibe 4 durch einen Verstellmechanismus 5 zu tragen oder an diesem anzuschließen, welcher radial von außen nach innen in den Arbeitsraum 3 ragt und von außen (in Radialrichtung) an der Drosselscheibe 4 angeschlossen ist. Auch ein Verstellmechanismus 5, der in Axialrichtung an der Drosselscheibe 4 angreift, vorteilhaft axial ausgerichtet ist und insbesondere mit der Drosselscheibe 4 fluchtet, kann alternativ oder zusätzlich verwendet werden, um die Drosselscheibe 4 axial zu verschieben.

Bei der Ausführung gemäß der Figur 1 weist die Drosselscheibe 4 zusammen mit dem Verstellmechanismus 5 die Form eines auf dem Kopf stehenden L auf, bezogen jeweils auf einen Axialschnitt durch die hydrodynamische Kupplung oberhalb der Drehachse 6. Unterhalb der Drehachse 6 würde der Axialschnitt natürlich ein richtigherum stehendes L zeigen.

Bei der Ausführungsform gemäß der Figur 2 zeigt ein entsprechender Axialschnitt ein T, das durch die Drosselscheibe 4 zusammen mit dem Verstellmechanismus 5 ausgebildet wird.

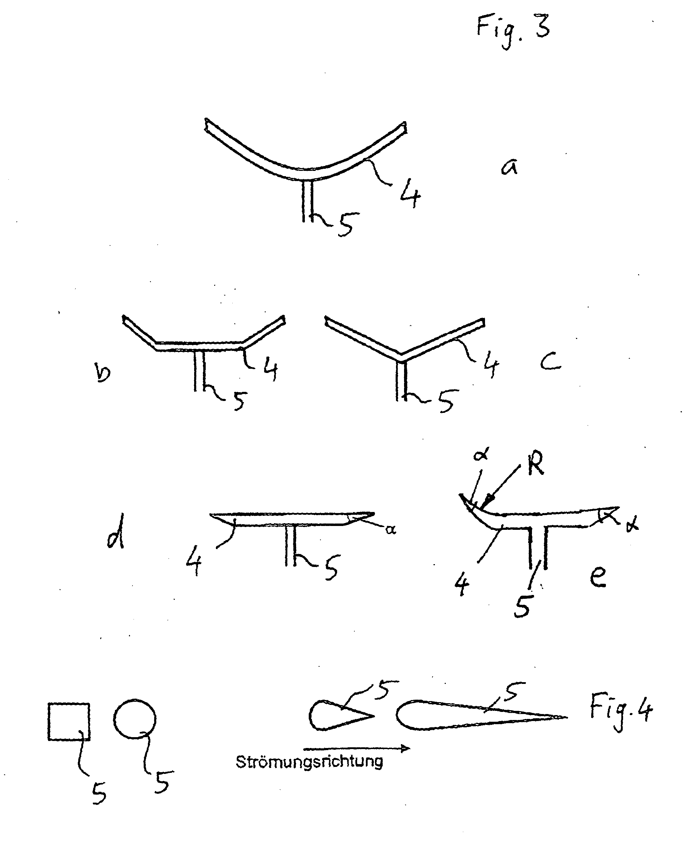

In der Figur 3 sind beispielhaft mögliche Ausführungsformen für die Drosselscheibe 4 in einem Axialschnitt durch die hydrodynamische Kupplung gesehen dargestellt. Gemäß der Figur 3a weist die Drosselscheibe 4 eine gekrümmte Form auf, so dass ihre beiden freien axialen Enden auf einem größeren Durchmesser liegen als ihre axiale Mitte. Der Krümmungsradius kann beispielsweise in einem Bereich liegen, der nach oben durch die Differenz zwischen dem Außendurchmesser des Arbeitsraums und dem Innendurchmesser des Arbeitsraums begrenzt wird, und nach unten durch ein Viertel dieser Differenz.

Gemäß der Figur 3b ist die Krümmung der Figur 3a durch einzelne winklig aneinander angeschlossene Segmente ersetzt. Bei der gezeigten Ausführungsform verläuft das mittlere Segment achsparallel zur Drehachse der hydrodynamischen Kupplung, und die beiden axial außen am mittleren Segment angeschlossenen Segmente sind winklig in Richtung eines größeren Durchmessers angeschlossen.

Bei der Figur 3c sind nur zwei winklig zueinander angeordnete Segmente vorgesehen, welche an ihrem axial inneren Ende gemeinsam am Verstellmechanismus 5 angeschlossen sind, und deren beiden freien Enden wiederum auf einem größeren Durchmesser liegen als die am Verstellmechanismus 5 angeschlossenen Enden.

Gemäß der Figur 3d weist die Drosselscheibe 4 im Anströmbereich und/oder Abströmbereich eine Spitze mit einem Winkel α auf. Der Winkel α liegt beispielsweise zwischen 10° und 45°.

Gemäß der Figur 3e sind die beiden axialen Enden der Drosselscheibe 4 in ihrer Form abweichend voneinander gestaltet. Jenes (freie) axiale Ende, das beim Verschieben der Drosselscheibe 4 aus ihrer inaktiven Position im Bereich des Trennspaltes zwischen dem Pumpenrad und dem Turbinenrad in ihre aktive Position innerhalb der Kreislaufströmung von Arbeitsmedium im Arbeitsraum dem Kreislaufzentrum beziehungsweise der axialen Mitte des Arbeitsraums zugewandt ist, endet auf einem größeren Durchmesser als das entgegengesetzte axiale Ende, das dem Schaufelradboden zugewandt ist. Das dem Kreislaufzentrum zugewandte axiale Ende der Drosselscheibe 4 auf dem vergleichsweise größeren Durchmesser optimiert die Drosselwirkung der Drosselscheibe 4, wohingegen das entgegengesetzte axiale Ende der Drosselscheibe 4, welches auf einem kleineren Durchmesser der hydrodynamischen Kupplung angeordnet ist und sich insbesondere in einem Axialschnitt durch die hydrodynamische Kupplung gesehen vollständig achsparallel beziehungsweise linear erstreckt, eine kleinere Aussparung im die Drosselscheibe 4 in ihrer aktiven Position aufnehmenden Schaufelrad, insbesondere dem Pumpenrad 1 ermöglicht. Dies wird besonders durch die Figuren 1 und 2 hervorgehoben, aus welchen man den "störenden" Eingriff der Drosselscheibe in das Pumpenrad 1 beziehungsweise die Beschaufelung desselben entnehmen kann.

Bei der in der Figur 3e gezeigten Ausführung ist jenes axiale Ende der Drosselscheibe 4, das auf dem vergleichsweise größeren Durchmesser der hydrodynamischen Kupplung positioniert ist, mit einem Radius R hin zu einem größeren Durchmesser abgerundet. Selbstverständlich ist es zusätzlich oder alternativ auch möglich, das entsprechende axiale Ende beziehungsweise den Übergang von der axialen Mitte der Drosselscheibe 4 zu dem entsprechenden axialen Ende mit einem oder mehreren Winkeln auszuführen. Das entgegengesetzte axiale Ende der Drosselscheibe 4, das bei der gezeigten Ausführungsform im wesentlichen auf einem konstanten Durchmesser der hydrodynamischen Kupplung verläuft, jedoch auch in Richtung eines kleineren Durchmessers abgerundet und/oder abgewinkelt sein könnte, oder in einem geringeren Ausmaß als das zuvor bezeichnete axiale Ende in Richtung eines größeren Durchmessers abgerundet oder abgewinkelt sein könnte, weist bei der gezeigten Ausführungsform wiederum eine Spitze mit einem Winkel α auf. Wie gezeigt, können auch beide axialen Enden der Drosselscheibe 4 eine Spitze mit einem Winkel α aufweisen, der gleichgroß oder abweichend voneinander gestaltet sein kann.

Selbstverständlich ist es auch möglich, anstelle des in der Figur 3 gezeigten radial von innen an der Drosselscheibe 4 angreifenden Verstellmechanismus 5 einen Verstellmechanismus (nicht dargestellt) zusätzlich oder alternativ vorzusehen, welcher radial von außen an der Drosselscheibe 4 angreift. Dementsprechend weist dann die Drosselscheibe zusammen mit dem an ihr angeschlossenen Teil des Verstellmechanismus im Axialschnitt durch die hydrodynamische Kupplung gesehen nicht die Form eines "richtigherum" stehenden T sondern eines auf dem Kopf stehenden T auf. Unter T-Form sind dabei auch jene Formen gemäß der Figuren 3a bis 3c (oder entsprechend auf dem Kopf stehend) zu verstehen, deren "Querbalken" des T nicht geradlinig sondern gebogen oder mit Winkeln vorgesehen sind. Der "Querbalken" kann entweder in Richtung eines größeren Durchmessers der hydrodynamischen Kupplung oder in Richtung eines kleineren Durchmessers der hydrodynamischen Kupplung gebogen oder mit Winkeln vorgesehen sein, wobei, wie bei der Figur 3e beispielsweise dargestellt, die beiden axialen Enden auch abweichend voneinander gestaltet sein können.

In der Figur 4 ist ein Querschnitt durch den Verstellmechanismus 5 gezeigt, wie er sich bei einer Draufsicht in Radialrichtung durch die hydrodynamische Kupplung von außen nach innen ergibt. So kann der Verstellmechanismus 5 beispielsweise eine viereckige, vieleckige, kreisrunde oder profilierte Querschnittsform aufweisen, letztere insbesondere in einer strömungsgünstigen Form, beispielsweise Tropfenform, wie sie von Turbinenschaufeln oder Tragflächen bekannt ist.

Der Verstellmechanismus 5 kann beispielsweise über dem Umfang der hydrodynamischen Kupplung verteilte, insbesondere mit gleichmäßigem Abstand zueinander angeordnete Stege umfassen, beispielsweise 3 bis 12 Stege, welche jeweils ein Drosselscheibensegment oder gruppenweise gemeinsam ein Drosselscheibensegment oder alle gemeinsam eine in Umfangsrichtung geschlossene Drosselscheibe tragen, welche dann auch als Drosselring bezeichnet werden könnte.

## Patentansprüche

1. Hydrodynamische Kupplung
1.1 mit einem Pumpenrad (1) und einem Turbinenrad (2), die miteinander einen torusförmigen, mit einem Arbeitsmedium befüllten oder befüllbaren Arbeitsraum (3) ausbilden;
1.2 es ist eine Drosselscheibe (4) vorgesehen, die in Axialrichtung der hydrodynamischen Kupplung verschiebbar ist, um wahlweise in den Arbeitsraum (3) eingebracht und/oder innerhalb von diesem verschoben zu werden; wobei
1.3 die Drosselscheibe (4) in Umfangsrichtung der hydrodynamischen Kupplung im Bereich eines mittleren Durchmessers des Arbeitsraums (3) verläuft und sich in einem Axialschnitt durch die hydrodynamische Kupplung gesehen mit ihrer von einer Kreislaufströmung des Arbeitsmediums angeströmten Anströmseite (4.1) achsparallel oder im wesentlichen achsparallel zur Drehachse der hydrodynamischen Kupplung erstreckt; und
1.4 die Drosselscheibe (4) aus einer inaktiven Position, in welcher sie keine oder nur eine geringe Drosselwirkung auf die Kreislaufströmung von Arbeitsmedium im Arbeitsraum (3) aufweist, in eine aktive Position, in welcher sie eine vergleichsweise wesentlich stärkere Drosselwirkung auf die Kreislaufströmung aufweist, verschiebbar ist, und die inaktive Position im Bereich des Trennspaltes (7) zwischen dem Pumpenrad (1) und dem Turbinenrad (2) angeordnet ist;
**dadurch gekennzeichnet, dass**
1.5 der Arbeitsraum (3) in einem Axialschnitt durch die hydrodynamische Kupplung gesehen eine vollflächige Form, frei von einem durch eine Wandung gegenüber dem restlichen Arbeitsraum (3) abgegrenzten Zentrum aufweist, so dass die Drosselscheibe (4) sowohl in ihrer aktiven Position als auch in ihrer inaktiven Position vom Strömungsbereich des Arbeitsraumes (3) unmittelbar, frei von einer zwischengeschalteten Wandung, umschlossen wird.

2. Hydrodynamische Kupplung gemäß Anspruch 1, **dadurch gekennzeichnet, dass** die Drosselscheibe (4) hohlzylinderförmig ist oder die Form eines Sektors eines Hohlzylinders aufweist.

3. Hydrodynamische Kupplung gemäß einem der Ansprüche 1 oder 2, **dadurch gekennzeichnet, dass** die Drosselscheibe (4) an einem Verstellmechanismus (5) angeschlossen ist, insbesondere von diesem getragen wird, wobei der Verstellmechanismus (5) radial von innen und/oder radial von außen in einem axial mittleren Bereich der Drosselscheibe (4) angreift, wobei die Drosselscheibe (4) insbesondere starr am Verstellmechanismus (5) angeschlossen ist.

4. Hydrodynamische Kupplung gemäß Anspruch 3, **dadurch gekennzeichnet, dass** der Verstellmechanismus (5) und die Drosselscheibe (4) frei von gelenkigen Verbindungen ausgeführt sind, wobei der Verstellmechanismus (5) insbesondere einen druckbeaufschlagten Kolben in einem Kolbenraum aufweist, mittels welchem der Verstellmechanismus (5) und damit die Drosselscheibe (4) durch wahlweise Druckbeaufschlagung verschiebbar ist.

5. Hydrodynamische Kupplung gemäß einem der Ansprüche 3 oder 4, **dadurch gekennzeichnet, dass** die Drosselscheibe (4) zusammen mit dem an ihr angeschlossenen Teil des Verstellmechanismus (5) im Axialschnitt durch die hydrodynamische Kupplung gesehen L-förmig ist oder die Form eines auf dem Kopf stehenden L aufweist.

6. Hydrodynamische Kupplung gemäß einem der Ansprüche 3 oder 4, **dadurch gekennzeichnet, dass** die Drosselscheibe (4) zusammen mit dem an ihr angeschlossenen Teil des Verstellmechanismus (5) im Axialschnitt durch die hydrodynamische Kupplung gesehen T-förmig ist oder die Form eines auf dem Kopf stehenden T aufweist.

7. Hydrodynamische Kupplung gemäß einem der Ansprüche 3 bis 6, **dadurch gekennzeichnet, dass** in einem Axialschnitt durch die hydrodynamische Kupplung gesehen das erste axiale Ende der Drosselscheibe (4) auf einem anderen, insbesondere größeren Durchmesser der hydrodynamischen Kupplung endet, als das zweite, entgegengesetzt hierzu angeordnete axiale Ende der Drosselscheibe (4), wobei insbesondere das in der aktiven Position der Drosselscheibe (4) dem Zentrum der Kreislaufströmung zugewandte axiale Ende auf einem größeren Durchmesser als das entgegengesetzte axiale Ende angeordnet ist.

## Claims

1. A hydrodynamic coupling;
1.1 comprising a pump wheel (1) and a turbine wheel (2) which jointly form a toroidal working chamber (3) which is filled or can be filled with a working medium;
1.2 a throttle disk (4) is provided which is displaceable in the axial direction of the hydrodynamic coupling in order to be optionally introduced into the working chamber (3) and/or to be displaced within the same, with
1.3 the throttle disk (4) extending in the circumferential direction of the hydrodynamic coupling in the region of a middle diameter of the working chamber (3) and extending axially parallel or substantially axially parallel in relation to the rotational axis of the hydrodynamic coupling with its inflow side (4.1) which has flow against the same by the cycle flow of the working medium, as seen in an axial sectional view through the hydrodynamic coupling, and
1.4 the throttle disk (4) is displaceable from an inactive position in which it has no or only a very low throttling effect on the cycle flow of working medium in the working chamber (3) into an active position in which it has a comparatively stronger throttling effect on the cycle flow, and the inactive position is arranged in the region of the separating gap (7) between the pump wheel (1) and the turbine wheel (2), **characterized in that**
1.5 the working chamber (3), when seen in an axial sectional view through the hydrodynamic coupling, has a full-surface shape which is free from a center which is delimited by a wall against the remaining working chamber (3), so that the throttle disk (4) is directly enclosed by the flow region of the working chamber, free from any interposed wall, both in its active position as well as its inactive position.

2. A hydrodynamic coupling according to claim 1, **characterized in that** the throttle disk (4) has the shape of a hollow cylinder or the shape of a sector of a hollow cylinder.

3. A hydrodynamic coupling according to one of the claims 1 or 2, **characterized in that** the throttle disk (4) is connected to an adjusting mechanism (5), and is especially held by the same, with the adjusting mechanism (5) acting in an axially middle region of the throttle disk (4) radially from the inside and/or radially from the outside, with the throttle disk (4) being especially connected in a rigid manner to the adjusting mechanism (5).

4. A hydrodynamic coupling according to claim 3, **characterized in that** the adjusting mechanism (5) and the throttle disk (4) are arranged to be free from any articulated connections, with the adjusting mechanism (5) especially having a pressurized piston in a piston chamber by means of which the adjusting mechanism (5) and thus the throttle disk (4) is displaceable by optional pressurization.

5. A hydrodynamic coupling according to one of the claims 3 or 4, **characterized in that** the throttle disk (4), when seen in an axial sectional view through the hydrodynamic coupling, is L-shaped together with the part of the adjusting mechanism (5) which is connected to the same, or has the form of an upside down L.

6. A hydrodynamic coupling according to one of the claims 3 or 4, **characterized in that** the throttle disk (4), when seen in an axial sectional view through the hydrodynamic coupling, is T-shaped together with the part of the adjusting mechanism (5) which is connected to the same, or has the form of an upside down T.

7. A hydrodynamic coupling according to one of the claims 3 to 6, **characterized in that** the first axial end of the throttle disk (4), when seen in an axial sectional view through the hydrodynamic coupling, ends on another, especially larger diameter of the hydrodynamic coupling than the second axial end of the throttle disk (4) which is arranged opposite to the same, with especially the axial end facing the center of the cycle flow in the active position of the throttle disk (4) being arranged on a larger diameter than the opposite axial end.

## Revendications

1. Accouplement hydrodynamique
1.1 avec une roue de pompe (1) et une roue de turbine (2), formant ensemble un espace de travail (3) toroïdal rempli ou pouvant être rempli avec un fluide de travail ;
1.2 il est prévu un disque d'étranglement (4) déplaçable dans le sens axial de l'accouplement hydrodynamique pour être au choix introduit dans l'espace de travail (3) et/ou déplacé à l'intérieur de celui-ci,
1.3 le disque d'étranglement (4) se trouvant, dans le sens de la circonférence de l'accouplement hydrodynamique, au niveau d'un diamètre médian de l'espace de travail (3) et s'étendant vu en coupe axiale à travers l'accouplement hydrodynamique, avec sa face d'amont (4.1) recevant une circulation du fluide de travail parallèle ou sensiblement parallèle à l'axe de rotation de l'accouplement hydrodynamique ; et
1.4 le disque d'étranglement (4) pouvant être déplacé d'une position inactive, dans laquelle il n'exerce pas ou très peu d'effet d'étranglement sur la circulation de fluide de travail dans l'espace de travail (3), à une position active dans laquelle il exerce un effet d'étranglement sensiblement plus important sur la circulation, et la position inactive étant disposée au niveau de l'espace de séparation (7) entre la roue de pompe (1) et la roue de turbine (2) ;
**caractérisé en ce que**
1.5 l'espace de travail (3) présente, vu en coupe axiale à travers l'accouplement hydrodynamique, une forme entière dépourvue de centre délimité par une paroi par rapport au reste de l'espace de travail (3), de sorte que le disque d'étranglement (4) est entouré aussi bien dans sa position active que dans sa position inactive par la zone d'écoulement de l'espace de travail (3), directement et sans cloison interposée.

2. Accouplement hydrodynamique selon la revendication 1, **caractérisé en ce que** le disque d'étranglement (4) est en forme de cylindre creux ou a la forme d'un secteur de cylindre creux.

3. Accouplement hydrodynamique selon l'une des revendications 1 ou 2, **caractérisé en ce que** le disque d'étranglement (4) est raccordé à un mécanisme de déplacement (5), en particulier porté par celui-ci, le mécanisme de déplacement (5) se mettant en prise dans le sens radial par l'intérieur et/ou dans le sens radial par l'extérieur dans une zone centrale dans le sens axial du disque d'étranglement (4), lequel disque d'étranglement (4) est raccordé en particulier de façon rigide au mécanisme de déplacement (5).

4. Accouplement hydrodynamique selon la revendication 3, **caractérisé en ce que** le mécanisme de déplacement (5) et le disque d'étranglement (4) sont réalisés sans liaisons articulées, le mécanisme de déplacement (5) présentant en particulier un piston soumis à une pression dans un espace de piston, au moyen duquel le mécanisme de déplacement (5) et ainsi le disque d'étranglement (4) peuvent être déplacés par l'application choisie d'une pression.

5. Accouplement hydrodynamique selon l'une des revendications 3 ou 4, **caractérisé en ce que** le disque d'étranglement (4) présente avec la partie du mécanisme de déplacement (5) qui lui est raccordée, en coupe axiale à travers l'accouplement hydrodynamique, la forme d'un L ou d'un L renversé.

6. Accouplement hydrodynamique selon l'une des revendications 3 ou 4, **caractérisé en ce que** le disque d'étranglement (4) présente avec la partie du mécanisme de déplacement (5) qui lui est raccordée, en coupe axiale à travers l'accouplement hydrodynamique, la forme d'un T ou d'un T renversé.

7. Accouplement hydrodynamique selon l'une des revendications 3 à 6, **caractérisé en ce que** vu en coupe axiale à travers l'accouplement hydrodynamique, la première extrémité axiale du disque d'étranglement (4) se termine sur un autre diamètre, en particulier plus grand, de l'accouplement hydrodynamique que la deuxième extrémité du disque d'étranglement (4) située à l'opposé dans le sens axial, l'extrémité axiale tournée vers le centre de la circulation étant disposée, en particulier dans la position active du disque d'étranglement (4), sur un plus grand diamètre que l'extrémité axiale opposée.
